(19) Europäisches Patentamt
European Patent Office
Office européen des brevets

(11) **EP 1 359 678 B1**

(12) **EUROPEAN PATENT SPECIFICATION**

(45) Date of publication and mention
of the grant of the patent:
**20.05.2009 Bulletin 2009/21**

(51) Int Cl.:
*H04B 1/707* (2006.01)    *H04L 27/26* (2006.01)
*H04J 13/00* (2006.01)

(21) Application number: **01130168.6**

(22) Date of filing: **19.12.2001**

(54) **Code allocation method in an MC-CDMA telecommunication system**

Kodeverteilverfahren in einem Mehrträger-CDMA Nachrichtenübertragungssystem

Procédé d'allocation de codes dans un système de télécommunication à AMRC par porteuses multiples

(84) Designated Contracting States:
**AT BE CH CY DE DK ES FI FR GB GR IE IT LI LU MC NL PT SE TR**

(30) Priority: **12.12.2001 EP 01403229**

(43) Date of publication of application:
**05.11.2003 Bulletin 2003/45**

(73) Proprietor: **Mitsubishi Electric R&D Centre Europe B.V.**
**1119 NS Schiphol Rijk (NL)**

(72) Inventor: **Mottier, David,**
**Mitsubishi Electric ITE**
**35700 Rennes (FR)**

(74) Representative: **Maillet, Alain**
**Cabinet LE GUEN MAILLET**
**5, place Newquay**
**BP 70250**
**35802 Dinard Cedex (FR)**

(56) References cited:
• **GINIGE T ET AL: "DYNAMIC SPREADING CODE SELECTION METHOD FOR PAPR REDUCTION IN OFDM-CDMA SYSTEMS WITH 4-QAM MODULATION" IEEE COMMUNICATIONS LETTERS, IEEE SERVICE CENTER, PISCATAWAY,US, US, vol. 5, no. 10, October 2001 (2001-10), pages 408-410, XP001110787 ISSN: 1089-7798**
• **MOTTIER D ET AL: "A spreading sequence allocation procedure for MC-CDMA transmission systems" IEEE VTS FALL VTC2000, vol. 3, 24 September 2000 (2000-09-24), pages 1270-1275, XP010524702**
• **HARA S: "OVERVIEW OF MULTICARRIER CDMA" IEEE COMMUNICATIONS MAGAZINE, IEEE SERVICE CENTER. PISCATAWAY, N.J, US, December 1997 (1997-12), pages 126-133, XP000858431 ISSN: 0163-6804**

**Description**

The present invention relates to a method for allocating a code to a reverse link in a multi-carrier code division multiple access system. The present invention relates in particular to a method for allocating a scrambling/spreading code to such a reverse link.

In recent years, Multi-Carrier Code Division Multiple Access (MC-CDMA) has been receiving widespread interest for wireless broadband multimedia applications. Multi-Carrier Code Division Multiple Access (MC-CDMA) combines OFDM (Orthogonal Frequency Division Multiplex) modulation and the CDMA multiple access technique. This multiple access technique was proposed for the first time by N. Yee et al. in the article entitled "Multicarrier CDMA in indoor wireless radio networks" which appeared in Proceedings ofPIMRC'93, Vol. 1, pages 109-113, 1993. The developments of this technique were reviewed by S. Hara et al. in the article entitled "Overview of Multicarrier CDMA" published in IEEE Communication Magazine, pages 126-133, December 1997.

Unlike DS-CDMA (Direct Spread Code Division Multiple Access), in which the signal of each user is multiplied in the time domain in order to spread its frequency spectrum, the signature here multiplies the signal in the frequency domain, each element of the signature multiplying the signal of a different sub-carrier.

MC-CDMA combines the advantageous features of CDMA and OFDM, i.e. high spectral efficiency, multiple access capabilities, robustness in presence of frequency selective channels, high flexibility, narrow-band interference rejection, simple one-tap equalisation, etc.

In the paper of Thilaks Ginige entitled "Dynamic spreading code selection method for PAPR reduction in OFDM-CDMA systems with 4-QAM modulation" published in the IEEE communications letters, a dynamic spreading selection technique is proposed in order to obtain low peak to average ratio of an orthogonal frequency division multiplexing code division multiple access system.

However MC-CDMA presents a significant drawback which is due to the multi-carrier modulation. Indeed, as shown below, an MC-CDMA signal consists in a sum of modulated sub-carriers which may result in a high dynamic range.

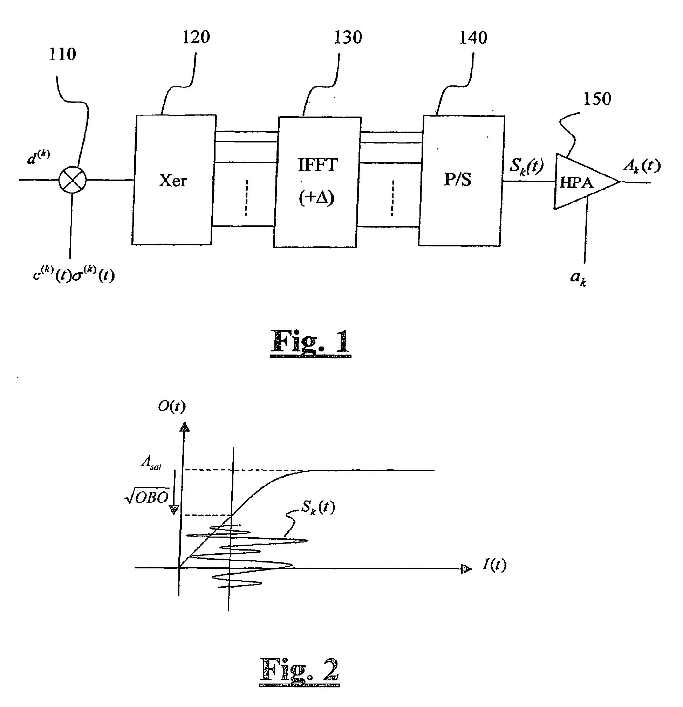

More specifically, Fig. 1 illustrates the structure of an MC-CDMA transmitter for a given user $k$. We consider here a reverse link, i.e. we suppose that the transmitter is located in the mobile terminal of the user. Let $d^{(k)}(n)$ be the symbol to be transmitted from user $k$ at time $nT$ to the base station, where $d^{(k)}(n)$ belongs to the modulation alphabet. The symbol $d^{(k)}(n)$ is first multiplied at 110 by the product of a spreading sequence, denoted $c^{(k)}(t)$, and a scrambling sequence specific to the user and denoted $\sigma^{(k)}(t)$. The spreading sequence consists of $N$ "chips", each "chip" being of duration $T_c$, the total duration of the spreading sequence corresponding to a symbol period $T$. Without loss of generality, we assume otherwise specified in the following that a single spreading sequence is allocated to the user. In general, a user may be allocated one or a plurality of orthogonal spreading sequences, according to the data rate required. In order to mitigate cellular interference (inter-cell interference and intra-cell interference), the spreading/scrambling sequences allocated to different users are preferably chosen orthogonal.

The results of the multiplication of the symbol $d^{(k)}(n)$ by the elements of the product sequence are multiplexed over a subset of frequencies of an OFDM multiplex. In general the number $N$ of frequencies of said subset is a sub-multiple of the number $L$ of frequencies of the OFDM multiplex. We denote $\Omega_k$ the subset of $\{0,..,L-1\}$ indexing the frequencies used by user $k$, $c_\ell^{(k)}$, $\ell \in \Omega_k$ the values of the corresponding spreading sequence elements and $\sigma_\ell^{(k)}$, $\ell \in \Omega_k$ the values of the scrambling sequence elements. The block of symbols multiplexed in 120 is then subjected to an inverse fast Fourier transformation (IFFT) in the module 130. In order to prevent intersymbol interference, a guard interval of length typically greater than the duration of the impulse response of the transmission channel, is added to the MC-CDMA symbol. This is achieved in practice by adding a prefix (denoted $\Delta$) identical to the end of the said symbol. After being serialised in the parallel to serial converter 140, the MC-CDMA symbols are amplified in amplifier 150 in order to be transmitted over the reverse link transmission channel. The MC-CDMA method can therefore be analysed into a spreading in the spectral domain (before IFFT) followed by an OFDM modulation.

The signal $S_k(t)$ at time $t$ which is supplied to the amplifier before being transmitted over the reverse link transmission channel can therefore be written, if we omit the prefix:

$$S_k(t) = d^{(k)}(n) \sum_{\ell \in \Omega_\ell} c_\ell^{(k)} \sigma_\ell^{(k)} \exp(j.2\pi f_\ell t) \qquad \text{for} \qquad nT \le t \le (n+1)T \qquad (1)$$

where $f_\ell$, $\ell=0,..,L-1$ are the frequencies of the OFDM multiplex.

The dynamic range of the MC-CDMA signal $S_k(t)$ is estimated by the so-called Peak to Average Power Ratio (PAPR) expressed by:

$$PAPR(S_k)=\frac{\max_{T_m}|S_k(t)|^2}{\frac{1}{T_m}\int_0^{T_m}|S_k(t)|^2 dt} \tag{2}$$

where $T_m$ is the time window over which the MC-CDMA signal is observed. Equivalently, the dynamic range of the MC-CDMA signal is expressed by the so-called Crest Factor (CF), simply defined as:

$$CF(S_k)=\sqrt{PAPR(S_k)} \tag{3}$$

An MC-CDMA signal of large PAPR is particularly sensitive to non-linearities of the output amplifier, also referred to as High Power Amplifier (HPA). Indeed, above a given signal amplitude, the HPA enters a saturation zone and the amplified signal is significantly distorted. The level of distortion of the amplified signal $A_k(t)$ is expressed by the so-called Output Back-Off (OBO):

$$OBO_k=\frac{P_{sat}}{E(|A_k(t)|^2)} \tag{4}$$

where $E(|A_k(t)|^2)$ is the mean power of the amplified signal and $P_{sat} = A_{sat}^2$ represents the saturation power of the amplifier where $A_{sat}$ is the amplitude saturation threshold. Equivalently, the level of distortion can be assessed at the input of the amplifier by the so-called Input Back-Off (IBO):

$$IBO_k = \frac{E(|S_k(t)|^2)}{P_{sat}} \tag{4'}$$

where $E(|S_k(t)|^2)$ is the mean power of the input signal.

The characteristics of an HPA amplifier is shown in Fig. 2 where $I(t)$ and $O(t)$ respectively denotes a signal amplitude at the input and the output of the amplifier. An example of MC-CDMA signal $S_k(t)$ is also represented at the input of the amplifier. It should be noted that, by decreasing the output back-off, the operating point of the amplifier is shifted towards saturation and for a given OBO threshold non-linear distortion appears. The lower the output back-off, the higher the distortion but also the higher the amplifier efficiency. The output back-off has therefore to be adjusted to an optimal value in order to obtained the best efficiency for a given level of distortion.

A first object of the present invention is to decrease or avoid the distortion of an MC-CDMA signal transmitted over a reverse link channel for a given amplifier efficiency. A second object of the present invention is to increase the amplifier efficiency for a given distortion level of said MC-CDMA signal. These objects are attained by the method defined in claim 1. Advantageous embodiments of the invention are set out in the dependent claims.

The characteristics of the invention will emerge from a reading of the following description given in relation to the accompanying figures, amongst which:

Fig. 1 depicts schematically the structure of an MC-CDMA transmitter known from the state of the art;
Fig. 2 depicts schematically the amplitude characteristics of a High Power Amplifier ;
Fig. 3 depicts schematically a flow chart of the code allocation procedure according to an embodiment of the invention;
Fig. 4 depicts schematically a method for setting the amplifier of a mobile terminal when a code allocation procedure according to an embodiment of the invention is used.

The basic idea underlying the invention is to allocate a code to a user by taking into account, on the one hand, the signal attenuation over the uplink channel and, on the other hand, the different PAPRs relative to the available codes .

We refer back again to the context of an MC-CDMA telecommunication system and we assume that each user $k$=1,..,$K$ can be allocated one or a plurality $I_k$ of spreading codes $c^{(k,i)}$, $i$=1,..,$I_k$ where $c^{(k,i)}$ is the sequence represented by $c_\ell^{(k,i)}$, $\ell \in \Omega_{k,i}$ and $\Omega_{k,i}$ is the subset of carriers of the OFDM multiplex which is used by the spreading code $c^{(k,i)}$. In general, the subsets $\Omega_{k,i}$ relative to a given user are chosen identical, that is $\Omega_{k,i} = \Omega_k$. In such instance, the spreading sequences $c_\ell^{(k,i)}$, $i$=1,...,$I_k$ are chosen orthogonal. The subsets may also be chosen disjoint, typically as interleaved subsets of {0,..,$L$-1}. For instance, if two spreading codes $c^{(k,1)}$ and $c^{(k,2)}$ are used for user $k$, the first subset $\Omega_{k,1}$ may correspond to the odd values of $\ell$ and the second subset $\Omega_{k,2}$ to the even values. In the latter case, the spreading sequences need not be orthogonal since they are frequency multiplexed.

Given $I_k$ consecutive symbols $d^{(k)}(n)$, $d^{(k)}(n+1)$ ,.., $d^{(k)}(n + I_k$ -1) having to be transmitted by user $k$, the MC-CDMA signal carrying these symbols can be expressed, similar to (1):

$$S_k(t) = \sum_{i=1}^{I_k} d^{(k)}(n+i) \sum_{\ell \in \Omega_{k,i}} c_\ell^{(k,i)} \sigma_\ell^{(k)} \exp(j.2\pi f_\ell t) \qquad \text{for} \qquad nT \leq t \leq (n+1)T \qquad (5)$$

As already seen above, the dynamic range of $S_k(t)$ can be estimated by its *PAPR*. The value $PAPR(S_k)$ depends among others upon the spreading codes $c^{(k,i)}$ and the scrambling code $\sigma^{(k)}$ allocated to the user.

In an uplink MC-CDMA telecommunication system, a base station or a plurality of neighbouring base stations are allocated a set of spreading codes. The base station allocates to each user $k$ within the cell, one or a plurality of spreading codes (according to the data rate required) and one scrambling code.

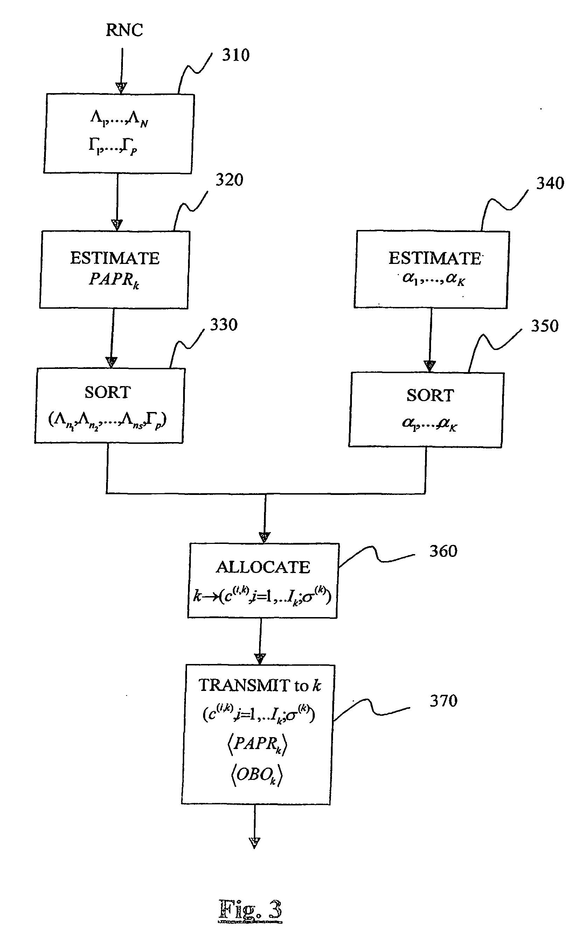

The procedure for allocating a scrambling code and spreading code(s) to a given user $k$ is illustrated in Fig. 3.

Let us consider a base station to which a set of spreading codes {$\Lambda_1$,..,$\Lambda_N$} and a set of scrambling codes {$\Gamma_1$,.., $\Gamma_P$} are allocated (step 310), for example by a RNC (Radio Network Controller).

In step 320, the base station estimates for each combination of spreading codes and scrambling code ($\Lambda_{n_1}$, $\Lambda_{n_2}$,..,$\Lambda_{ns}$,$\Gamma_p$) where $\Lambda_{ni} \in$ {$\Lambda_1$,..,$\Lambda_N$} and $\Gamma_p \in$ {$\Gamma_1$,..,$\Gamma_P$} the maximum value of $PAPR(S_k)$, that is:

$$PAPR_k = \underset{S_k}{Max}[PAPR(S_k)] \qquad (6)$$

where the maximum is taken over the sequences of consecutive symbols that can be transmitted by the user.

The combinations ($\Lambda_{n_1}$,$\Lambda_{n_2}$,...,$\Lambda_{ns}$,$\Gamma_p$) are then sorted in 330 according to their corresponding $PAPR_k$ values and stored in a look-up table $\Xi$.

Alternatively, according to a preferred embodiment of the invention, the $PAPR_k$ values having been predetermined, the combinations ($\Lambda_{n_1}$,$\Lambda_{n_2}$,...,$\Lambda_{ns}$,$\Gamma_p$) are pre-stored in a look-up table according to the ascending or descending $PAPR_k$ order. In such instance, the steps 320 and 330 are simply omitted.

It is assumed that the base station can estimate (340) the path attenuation for each and every active user $k$, for example, from a power control information transmitted by the mobile terminal. Alternatively, the path attenuation can be derived from the distance of the mobile terminal to the base station. For example, the path attenuation can be expressed in terms of attenuation coefficient $\alpha_k$ or distance value $d_k$.

The base station sorts (step 350) the propagation path attenuation coefficients $\alpha_1$,..,$\alpha_K$ or the distances relative to the $K$ active users of the cell. Without loss of generality we may suppose that $\alpha_1 \leq .. \leq \alpha_k \leq .. \leq \alpha_K$. We suppose also that the same number of spreading codes is allocated to the $K$ users, i.e. $I_k = I$, $\forall k$. If this is not the case, the users are sorted and clustered into groups of users requiring the same number of spreading codes and the allocation procedure is carried out for each group independently.

According to a first embodiment of the invention, the allocation procedure allocates to each user $k$ a ($I$+1)-tuple ($\Lambda_{n_1}$,$\Lambda_{n_2}$,...,$\Lambda_{nI_k}$,$\Gamma_p$) consisting of $I$ spreading codes and one scrambling code, such that the ordering of the $PAPR_k$ values is as follows:

$$PAPR_K \leq .. \leq PAPR_k \leq .. \leq PAPR_1 \qquad (7)$$

In other words, the codes are allocated so that the more distant users (or the users suffering from a higher propagation loss) benefit from the codes generating lower *PAPR* values. By so doing, the HPA of a distant mobile terminal can be operated at a lower output back-off value, which in turn allows to reduce the distortion level for a given amplifier efficiency or, conversely, to increase the amplifier efficiency (and hence to lower the power consumption) for a given distortion level. A further advantage of the invention lies also in a larger cell coverage (i.e. a larger cell diameter) since the distance of a mobile terminal to the base station can be increased for a same power consumption and a given distortion level.

The code allocation procedure set out above is carried out at regular time intervals for tracking the changes in the propagation path attenuation coefficients of the different users. However, in order to avoid frequent re-allocation of the codes, it can be decided that no re-allocation is effected if the variations of the propagation path attenuation coefficients lie below a given threshold. The code allocation procedure is also carried out each time a link to be established or released, e.g. during handover.

Preferably, the look-up table $\Xi$ mentioned above is scanned, starting from the ($l$+1)-tuple of lowest *PAPR* value and the codes stored therein are allocated to the users starting from the one suffering from the highest propagation loss.

For a given user $k$, the spreading codes $\Lambda_{n_1},\Lambda_{n_2},...,\Lambda_{nl_k}$ and the scrambling code $\Gamma_p$ retrieved from the table are allocated to the user (step 360) as follows:

$$c^{(k,i)}=\Lambda_{n_i} \text{ and } \sigma^{(k)}=\Gamma_p \tag{8}$$

According to a second embodiment of the invention, the range $]0,\alpha_{max}]$ of the attenuation coefficients where $\alpha_{max}$ (or similarly the distance range $]0,R_{max}]$ where $R_{max}$ is the cell radius) is split up into M elementary ranges $]0,\rho_1],]\rho_1,\rho_2],...,]\rho_{M-1},\alpha_{max}]$. Each elementary range $]\rho_{m-1},\rho_m]$ is attributed a subset $\Xi_m$ of ($l$+1)-tuples $(\Lambda_{n_1},\Lambda_{n_2},...,\Lambda_{nl_k},\Gamma_p)$ such that the *PAPR* value resulting from any combination of codes belonging to a subset $\Xi_m$ is lower than the *PAPR* value generating from any combination of codes belonging to the subset $\Xi_{m-1}$.

For a given user $k$, the allocation procedure first determines in which elementary range $]\rho_{m-1},\rho_m]$ the attenuation coefficient falls. An available combination of codes is then looked for in the subset $\Xi_m$. Advantageously, the subset $\Xi_m$ is arranged as a look-up table stored in a memory of the base station. Preferably, the look-up table $\Xi_m$ is scanned, starting from the ($l$+1)-tuple of lowest *PAPR* value and the first combination of available of codes is allocated to the user. The ($l$+1)-tuple is then marked as unavailable in the table until a new allocation makes it available back again.

Here again, the code allocation procedure is carried out at regular time intervals and each time a user requests to establish or release a link. However, in the present embodiment, provided the attenuation coefficient of a user remains in the same elementary range no re-allocation is needed.

According to a first variant, an information indicating the allocated spreading code(s) and scrambling code is sent to the user (step 370). Preferably, the look-up table $\Xi$ (or the set of look-up tables $\Xi_m$) is also stored in a memory of the mobile terminal and the information indicating the allocated codes is an address of said table.

According to a second variant, in addition to the information indicating the allocated codes, the base station transmits to the mobile terminal an information giving the $PAPR_k$ value corresponding to said allocated codes. It should be noted that in place of $PAPR_k$ the Crest Factor $\sqrt{PAPR_k}$ or, more generally, an information characteristic of the dynamic range of the modulated signal can be transmitted.

According to a third variant, in addition to the information indicating the allocated codes, the base station transmits to the terminal an information giving the optimal output back-off, denoted $OBO_k$, corresponding to said $PAPR_k$ value. In such instance, however, the base station needs to know the characteristics of the HPA of the mobile terminal.

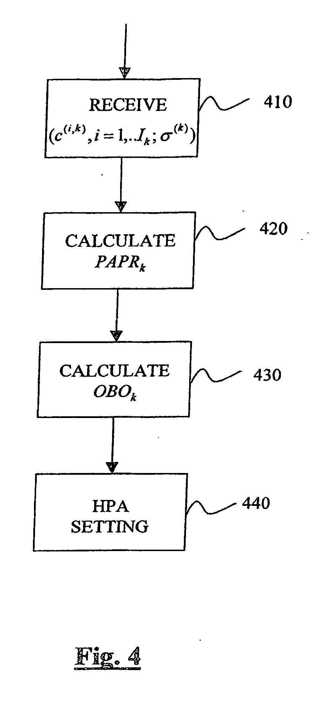

As shown in Fig. 4, on the mobile terminal side, the information indicating the allocated codes is received in 410. The allocated spreading codes $c^{(i,k)}$ and scrambling code $\sigma^{(k)}$ are retrieved from said information and the corresponding value $PAPR_k$ is calculated in 420. The output back-off value $OBO_k$ is derived therefrom in 430 and the operating point of the amplifier is set accordingly (step 440).

In the second variant of the invention, the calculation step 420 is skipped (since the $PAPR_k$ is sent by the base station to the mobile terminal) and it is directly proceeded with the calculation of $OBO_k$ and the setting of the operating point of the amplifier.

Similarly, in the third variant of the invention, the calculation steps 420 and 430 are skipped and it is directly proceeded with the setting of the operating point of the amplifier. Furthermore, it should be noted that the optimal input back-off value $IBO_k$ of the amplifier and more generally an information representative of the optimal setting of the operating point of the amplifier can be transmitted in place of the optimal output back-off value $OBO_k$.

Although the invention has been essentially described in the foregoing as a code allocation method for an MC-CDMA telecommunication system, it should be clear to the man skilled in the art that it can also be applied to any system combining code multiple access and OFDM modulation.

## Claims

1.  Code allocation method for a mobile telecommunication system in which the symbols sent from a user ($k$) to a base station are spread with a spreading code or a combination of spreading codes ($c^{(k,i)}$) before being modulated with a plurality ($\Omega_{k,i}$) of frequency carriers to produce a modulated signal ($S_k$) transmitted to said base station over a transmission channel, **characterised in that** for each of a plurality of available spreading codes or available combinations thereof ($\Lambda_{n_1}, \Lambda_{n_2},...,\Lambda_{nl_k}$) a value of a first variable ($PAPR_k$) characteristic of the dynamic range of said modulated signal ($S_k$) is determined by the base station, and that for each of a plurality of users a value of a second variable ($\alpha_k$) characteristic of the propagation loss incurred over the transmission channel of the user is determined by the base station, and that a spreading code or combination of spreading codes producing a high dynamic range is allocated by the base station to a user if the propagation loss over its transmission channel is low , whereas a spreading code or combination of spreading codes producing a low dynamic range is allocated to said user if the propagation loss over its transmission channel is high.

2.  Code allocation method according to claim 1, **characterised in that** the symbols sent by a user to said base station being multiplied with a scrambling code before being modulated, **characterised in that** for each of a plurality of available spreading codes or available combinations thereof ($\Lambda_{n_1},\Lambda_{n_2},...,\Lambda_{nl_k}$) and each of a plurality of scrambling codes ($\Gamma_p$) a value of a first variable ($PAPR_k$) characteristic of the dynamic range of said modulated signal ($S_k$) is determined by the base station, and that for each of a plurality of users a value of a second variable ($\alpha_k$) characteristic of the propagation loss incurred over the transmission channel of the user is determined by the base station, and that a scrambling code and a spreading code or combination of spreading codes producing a high dynamic range is allocated by the base station to a user if the propagation loss over its transmission channel is low, whereas a scrambling code and a spreading code or combination of spreading codes producing a low dynamic range is allocated to said user if the propagation loss over its transmission channel is high.

3.  Code allocation method according to any preceding claim, **characterised in that** the values of said first variable for the different spreading codes or combinations of spreading codes and the different scrambling codes, if used, are sorted according to a first order.

4.  Code allocation method according to any preceding claim, **characterised in that** the users served by said base station are sorted according to a second order, said second order being the same as the order of the respective values of said second variable for said users.

5.  Code allocation method according to claims 3 and 4, **characterised in that**, spreading codes/ scrambling codes are allocated to said users sorted according to said second order, so that the values of the first variable for said allocated codes are arranged in said first order.

6.  Code allocation method according to any of claims 1 to 3, **characterised in that** the variation range of the second variable is split up into consecutive elementary ranges and that the users are sorted according to a third order, said third order being the same as the order of the elementary ranges in which said values of the second variable respectively fall.

7.  Code allocation method according to any preceding claim, **characterised in that** said first variable is the maximum of a peak to average ratio of the modulated signal.

8.  Code allocation method according to any of claims 1 to 7, **characterised in that** said second variable is an attenuation coefficient of the transmission channel.

9.  Code allocation method according to any of claims 1 or 7, **characterised in that** said second variable is a location information of the user.

10. Code allocation method according to any preceding claim, **characterised in that** said base station transmits to said user a first information indicating the code or the codes allocated thereto.

**11.** Code allocation method according to claim 10, **characterised in that** said base station transmits to said user a second information (*PAPR_k*) giving the value of the first variable for the code or codes allocated to said user.

**12.** Code allocation method according to claim 10, **characterised in that** said base station derives, from the value of the first variable for the code or codes allocated to said user, a third information representative of a setting of an amplifier for amplifying the modulated signal of said user and transmits said third information to said user.

**Patentansprüche**

**1.** Codezuteilungsverfahren für ein mobiles Telekommunikationssystem, in welchem die von einem Anwender (k) zu einer Basisstation gesendeten Symbole mit einem Spreizcode oder einer Kombination von Spreizcodes ($c^{(k,i)}$) gespreizt werden, bevor sie mit einer Vielzahl ($Q_{k,i}$) von Frequenzträgern moduliert werden, um ein über einen Übertragungskanal zu der Basisstation übertragenes Signal ($S_k$) zu erzeugen, **dadurch gekennzeichnet, dass** für jeden oder jede einer Vielzahl von verfügbaren Spreizcodes oder verfügbaren Kombinationen davon ($\Lambda_{n_1}, \Lambda_{n_2}, ..., \Lambda_{nl_k}$) ein Wert einer ersten Variablen ($PAPR_k$), die für den Dynamikbereich des modulierten Signals ($S_k$) charakteristisch ist, durch die Basisstation bestimmt wird, und dass für jeden einer Vielzahl von Anwendern ein Wert einer zweiten Variablen ($\alpha_k$), die für den über den Übertragungskanal des Anwenders aufgetretenen Ausbreitungsverlust charakteristisch ist, durch die Basisstation bestimmt wird, und dass ein Spreizcode oder eine Kombination von Spreizcodes, der oder die einen hohen Dynamikbereich erzeugt, einem Anwender durch die Basisstation zugeteilt wird, wenn der Ausbreitungsverlust über seinen Übertragungskanal niedrig ist, wohingegen ein Spreizcode oder eine Kombination von Spreizcodes, der oder die einen niedrigen Dynamikbereich erzeugt, dem Anwender zugeteilt wird, wenn der Ausbreitungsverlust über seinen Übertragungskanal hoch ist.

**2.** Codezuteilungsverfahren nach Anspruch 1, **dadurch gekennzeichnet, dass** die durch einen Anwender zu der Basisstation gesendeten Symbole mit einem Verschlüsselungscode multipliziert werden, bevor sie moduliert werden, **dadurch gekennzeichnet, dass** für jeden oder jede einer Vielzahl von verfügbaren Spreizcodes oder verfügbaren Kombinationen davon ($\Lambda_{n_1}, \Lambda_{n_2}, ..., \Lambda_{nl_k}$) und jeden einer Vielzahl von Verschlüsselungscodes ($\Gamma_p$) ein Wert einer ersten Variablen ($PAPR_k$), die für den Dynamikbereich des modulierten Signals ($S_k$) charakteristisch ist, durch die Basisstation bestimmt wird, und dass für jeden einer Vielzahl von Anwendern ein Wert einer zweiten Variablen ($\alpha_k$), die für den über den Übertragungskanal des Anwenders aufgetretenen Ausbreitungsverlust charakteristisch ist, durch die Basisstation bestimmt wird, und dass ein Verschlüsselungscode und ein Spreizcode oder eine Kombination von Spreizcodes, die einen hohen Dynamikbereich erzeugen, einem Anwender durch die Basisstation zugeteilt wird, wenn der Ausbreitungsverlust über seinen Übertragungskanal niedrig ist, wohingegen ein Verschlüsselungscode und ein Spreizcode oder eine Kombination von Spreizcodes, die einen niedrigen Dynamikbereich erzeugen, dem Anwender zugeteilt wird, wenn der Ausbreitungsverlust über seinen Übertragungskanal hoch ist.

**3.** Codezuteilungsverfahren nach einem der vorangehenden Ansprüche, **dadurch gekennzeichnet, dass** die Werte der ersten Variablen für die unterschiedlichen Spreizcodes oder Kombinationen von Spreizcodes und, wenn sie verwendet werden, die unterschiedlichen Verschlüsselungscodes gemäß einer ersten Reihenfolge sortiert werden.

**4.** Codezuteilungsverfahren nach einem der vorangehenden Ansprüche, **dadurch gekennzeichnet, dass** die durch die Basisstation bedienten Anwender gemäß einer zweiten Reihenfolge sortiert werden, wobei die zweite Reihenfolge dieselbe wie die Reihenfolge der jeweiligen Werte der zweiten Variablen für die Anwender ist.

**5.** Codezuteilungsverfahren nach Anspruch 3 oder 4, **dadurch gekennzeichnet, dass** Spreizcodes/Verschlüsselungscodes den Anwendern gemäß der zweiten Reihenfolge sortiert zugeteilt werden, so dass die Werte der ersten Variablen für die zugeteilten Codes in der ersten Reihenfolge angeordnet werden.

**6.** Codezuteilungsverfahren nach einem der Ansprüche 1 bis 3, **dadurch gekennzeichnet, dass** der Variationsbereich der zweiten Variablen in aufeinanderfolgende elementare Bereich aufgeteilt wird und dass die Anwender gemäß einer dritten Reihenfolge sortiert werden, wobei die dritte Reihenfolge dieselbe wie die Reihenfolge der elementaren Bereiche ist, in welche jeweils die Werte der zweiten Variablen fallen.

**7.** Codezuteilungsverfahren nach einem der vorangehenden Ansprüche, **dadurch gekennzeichnet, dass** die erste Variable das Maximum eines Spitzenwert/Durchschnittswert-Verhältnisses des modulierten Signals ist.

**8.** Codezuteilungsverfahren nach einem der Ansprüche 1 bis 7, **dadurch gekennzeichnet, dass** die zweite Variable ein Dämpfungskoeffizient des Übertragungskanals ist.

9. Codezuteilungsverfahren nach einem der Ansprüche 1 bis 7, **dadurch gekennzeichnet, dass** die zweite Variable eine Positionsinformation des Anwenders ist.

10. Codezuteilungsverfahren nach einem der vorangehenden Ansprüche, **dadurch gekennzeichnet, dass** die Basisstation dem Anwender eine erste Information sendet, die den Code oder die Codes anzeigt, der oder die ihm zugeteilt sind.

11. Codezuteilungsverfahren nach Anspruch 10, **dadurch gekennzeichnet, dass** die Basisstation dem Anwender eine zweite Information ($PAPR_k$) sendet, die den Wert der ersten Variablen für den Code oder die Codes angibt, der oder die dem Anwender zugeteilt sind.

12. Codezuteilungsverfahren nach Anspruch 10, **dadurch gekennzeichnet, dass** die Basisstation von dem Wert der ersten Variablen für den Code oder die Codes, der oder die dem Anwender zugeteilt sind, eine dritte Information ableitet, die eine Einstellung eines Verstärkers zum Verstärken des modulierten Signals des Anwenders darstellt, und dem Anwender die dritte Information sendet.

## Revendications

1. Méthode d'allocation d'un code pour un système de télécommunication mobile dans lequel les symboles envoyés par un utilisateur (k) à une station de base sont étalés avec un code d'étalement ou une combinaison de codes d'étalement ($c^{(k,i)}$) avant d'être modules avec une pluralité ($\Omega_{k,i}$) de fréquences porteuses pour produire un signal modulé ($S_k$) transmis à ladite station de base dans un canal de transmission, **caractérisé en ce que** pour chacun de la pluralité de codes d'étalement disponibles ou de combinaisons de codes d'étalement disponibles ($\Lambda_{n1}, \Lambda_{n2}, ..., \Lambda_{nl_k}$) une valeur d'une première variable ($PAPR_k$) caractéristique de la plage de variation dynamique dudit signal modulé ($S_k$) est déterminée par la station de base et pour chacun de la pluralité d'utilisateurs une valeur d'un seconde variable ($\alpha_k$) caractéristique de la perte de propagation dans le canal de transmission de l'utilisateur est déterminée par la station de base, et un code d'étalement ou une combinaison de codes d'étalement produisant une grande plage de variation dynamique est allouée par la station de base à un utilisateur si la perte de propagation dans le canal de transmission de l'utilisateur est faible et un code d'étalement ou une combinaison de codes d'étalement produisant une petite plage de variation dynamique est allouée par la station de base à un utilisateur si la perte de propagation dans le canal de transmission de l'utilisateur est forte.

2. Méthode d'allocation d'un code selon la revendication 1, **caractérisé en ce que** les symboles envoyés par un utilisateur à ladite station de base sont multipliés par un code d'embrouillage avant d'être modulés, **caractérisé en ce que** pour chacun de la pluralité de codes d'étalement disponibles ou de combinaisons de codes d'étalement disponibles ($\Lambda_{n1}, \Lambda_{n2}, ... \Lambda_{nl_k}$) et chacun de la pluralité de codes d'embrouillage ($\Gamma_p$) une valeur d'un première variable ($PAPR_k$) caractéristique de la plage de variation dynamique dudit signal modulé ($S_k$) est déterminée par la station de base et pour chacun de la pluralité d'utilisateurs une valeur d'un seconde variable ($\alpha_k$) caractéristique de la perte de propagation dans le canal de transmission de l'utilisateur est déterminée par la station de base, et un code d'embrouillage et un code d'étalement ou une combinaison de codes d'étalement produisant une grande plage de variation dynamique est allouée par la station de base à un utilisateur si la perte de propagation dans le canal de transmission de l'utilisateur est faible et un code d'embrouillage et un code d'étalement ou une combinaison de codes d'étalement produisant une petite plage de variation dynamique est allouée audit utilisateur si la perte de propagation dans le canal de transmission de l'utilisateur est grande.

3. Méthode d'allocation d'un code selon l'une quelconque des revendications précédentes, **caractérisé en ce que** les valeurs de ladite première variable pour les différents codes d'étalement ou combinaisons de codes d'étalement et des différent codes d'embrouillage , si utilisés, sont triés selon un premier ordre.

4. Méthode d'allocation d'un code selon l'une quelconque des revendications précédentes, **caractérisé en ce que** les utilisateurs servis par ladite station de base sont triés selon un second ordre, ledit second ordre étant le même que l'ordre des valeurs respectives de ladite seconde variable pour lesdits utilisateurs.

5. Méthode d'allocation d'un code selon les revendications 3 et 4, **caractérisé en ce que** des codes d'étalement/ des codes d'embrouillage sont alloués audits utilisateurs triés selon ledit second ordre, tel que les valeurs de la première variable pour lesdits codes alloués sont ordonnées dans ledit premier ordre.

6.  Méthode d'allocation d'un code selon l'une quelconque des revendications 1 à 3, **caractérisé en ce que** la plage de variation de la seconde variable est divisée en plages élémentaires consécutives et les utilisateurs sont triés selon un troisième ordre, ledit troisième ordre étant le même que l'ordre des plages élémentaires dans lesquelles lesdites valeurs de la seconde variable tombent respectivement.

7.  Méthode d'allocation d'un code selon l'une quelconque des revendications précédentes, **caractérisé en ce que** ladite première variable est le maximum du rapport pic sur moyenne du signal modulé.

8.  Méthode d'allocation d'un code selon l'une quelconque des revendications 1 à 7, **caractérisé en ce** ladite seconde variable est un coefficient d'atténuation du canal de transmission.

9.  Méthode d'allocation d'un code selon l'une quelconque des revendications 1 à 7, **caractérisé en ce** ladite seconde variable est une information de positionnement de l'utilisateur.

10.  Méthode d'allocation d'un code selon l'une quelconque des revendications précédentes, **caractérisé en ce que** ladite station de base transmet audit utilisateur une première information indiquant le code ou les codes alloués.

11.  Méthode d'allocation d'un code selon la revendication 10, **caractérisé en ce que** ladite station de base transmet audit utilisateur une seconde information ($PAPR_k$) donnant la valeur de la première variable pour le code ou les codes alloués audit utilisateur.

12.  Méthode d'allocation d'un code selon la revendication 10, **caractérisé en ce que** ladite station de base dérive, à partir de la valeur de la première variable pour le code ou les codes alloués audit utilisateur, une troisième information représentative d'un paramètre d'un amplificateur pour amplifier le signal modulé dudit utilisateur et transmet ladite troisième information audit utilisateur.

110   120   130   140

$d^{(k)}$

$c^{(k)}(t)\sigma^{(k)}(t)$

Xer

IFFT
(+Δ)

P/S

$S_k(t)$

150

HPA

$A_k(t)$

$a_k$

## Fig. 1

$O(t)$

$A_{sat}$

$\sqrt{OBO}$

$S_k(t)$

$I(t)$

## Fig. 2

RNC

310

$\Lambda_1,...,\Lambda_N$

$\Gamma_1,...,\Gamma_P$

320

ESTIMATE
$PAPR_k$

340

ESTIMATE
$\alpha_1,...,\alpha_K$

330

SORT
$(\Lambda_{n_1},\Lambda_{n_2},...,\Lambda_{ns}\Gamma_p)$

350

SORT
$\alpha_1,...\alpha_K$

360

ALLOCATE
$k \rightarrow (c^{(i,k)},j=1,..I_k;\sigma^{(k)})$

370

TRANSMIT to $k$

$(c^{(i,k)},j=1,..I_k;\sigma^{(k)})$

$\langle PAPR_k \rangle$

$\langle OBO_k \rangle$

Fig. 3

RECEIVE
$(c^{(i,k)}, i = 1, ..I_k; \sigma^{(k)})$ — 410

CALCULATE
$PAPR_k$ — 420

CALCULATE
$OBO_k$ — 430

HPA
SETTING — 440

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **YEE et al.** Multicarrier CDMA in indoor wireless radio networks. *Proceedings ofPIMRC'93,* 1993, vol. 1, 109-113

- **S. HARA et al.** Overview of Multicarrier CDMA. IEEE Communication Magazine, December 1997, 126-133